# EUROPEAN PATENT SPECIFICATION

(11) **EP 2 309 046 B1**
(45) Date of publication and mention of the grant of the patent: **30.08.2017**
(21) Application number: 10010406.6
(22) Date of filing: 23.09.2010
(51) Int. Cl.: D04H 13/00, B32B 5/00, D06N 7/00, E04D 1/28

(54) **Multilayer fabric materials for roofing applications**
Mehrschichtige Stoffmaterialien für Bedachungsanwendungen
Matériaux de tissu multicouche pour applications de toiture

(30) Priority: 08.10.2009 EP 09012731
(43) Date of publication of application: 13.04.2011
(73) Proprietor: Johns Manville, Denver, CO 80202 (US)
(72) Inventor: Stehlin, Thomas, Dr., 65830 Kriftel (DE); Groh, Werner, Dr., 86830 Schwabmünchen (DE); Lehnert, Jörg, 86830 Schwabmünchen (DE)
(74) Representative: Mai Dörr Besier European Patent Attorneys

(56) References cited:
- EP-A2- 0 415 869
- US-A1- 2006 057 923

## Description

The invention relates to laminates made of multilayer fabric materials, including multilayer nonwoven. The laminates are particularly suitable for the use as bitumious roofing felts. The invention further relates to the method of manufacture these new multilayer laminates and the use thereof.

Laminates composed of bonded fabrics are useful in wall and floor coverings of constructions such as residential and commercial structures. They are particularly useful in roofing felts and insulation, where the laminates are utilized as support material. The bonded fabrics find particular applicability as carrier in bituminized roofing felts and membranes. Naturally, these laminates can be coated with other materials such as polyvinyl chloride.

A quite large variety of different nonwoven mats are available which can be used as carrier for bituminous roofing felts. Growingly important for the market however are certain features, like dimensional stability, special fire barrier properties and a good processing ability. For polyester spunbond materials these properties can only be reached by adding/introducing reinforcing means into the spunbond mat, like reinforcing glass threads or glass nonwoven. For the latter, EP 1 200 257 B1, discloses, so called CombiMats, which are laminates that comprises at least one spunbond layer and at least one nonwoven layer of glass fibers. The two or more layers are bonded together by needling and a binder.

EP 1 200 659 B1 discloses laminates obtained by binding the individual layers together by needling only, without the use of chemical binder.

EP 0 667 427 discloses a method for producing laminates which include the application of a glue which is inserted between the individual layers to bind the layers together to form the laminated product.

EP 0 379 100 B1 discloses a laminate made of a filamentous nonwoven and a glass fiber nonwoven, wherein the laminate is produced by first preconsolidating glass fiber nonwovens and then needling the nonwoven with synthetic fibers nonwoven. Subsequently, final setting is completed with an aqueous solution of a polymer free melamine formaldehyde precondensate, said precondensate showing a molar ratio melamine/formaldehyde of 1:1.0 to 1:3.5, wherein about 0.5 to 5% by weight of a usual hardener have been added to the solution. Also US2006/057923A discloses prior art. The manufacturing process of such multilayer composites is rather complicated and expensive. In particular there is a need for a simple process to manufacture two- or multilayer fabric mats that accomplishes the binding of the layers together without using an additional needling step.

The instant invention provides such cost effective and more simplified method for producing two- or multilayer fabric mats without using an additional needling step. The invention relates to a two- or multilayer fabric laminate comprising (i) at least one polymer nonwoven layer and (ii) at least one fabric layer of non-polymer fibers, characterized in that the at least two different layers (i) and (ii) have been laminated using at least one B-stage binder.

Another subject matter of the instant invention is a process for manufacturing the two- or multilayer fabric comprising (i) at least one polymer nonwoven layer and (ii) at least one fabric layer of non-polymer fibers in that the at least two different layers (i) and (ii) have been laminated using at least one B-stage binder only. When using fabrics or nonwoven, in particular non-polymer fiber fabric or nonwoven, with B-stage binder in the B-stage condition, i.e. a binder which is not fully cured, the lamination of the two or more different layers can be done in one single process step without the need of additional needling and without adding any additional glues or binders for the lamination. By heating up the laminate and pressing the two or more different layers together (e.g. via a press roll or similar means) the B-stage binder being present in at least one of the two or more different layers and being in the B-stage finally cures and glues the layers together. The complexity of the manufacturing process of such laminates is so greatly reduced.

In addition, the instant invention further relates to the use of the two- or multilayer fabric laminates comprising (i) at least one polymer nonwoven layer and (ii) at least one fabric layer of non-polymer fibers, characterized in that the at least two different layers (i) and (ii) have been laminated using at least one B-stage binder, as carrier for roofing felts and as bituminous roofing felts.

Preferably, the B-stage binder being present in at least one of the two or more different layers is located in the fabric layer of non-polymer fibers, which preferably is a glass and/or mineral fiber nonwoven, prior to the lamination. However, for the sake of clarity, the B-stage binder can be present in (i) one or all polymer nonwoven layer, or (ii) in one or all fabric layers of non-polymer fibers, or (iii) in one, several or all of the polymer nonwoven layer and one, several or all of the fabric layer of non-polymer fibers.

### Polymer fiber (PF) nonwoven

The non-woven of synthetic polymer material are staple fibers and/or filamentous fibers, preferably filamentous fibers. These filamentous fibers are also known to those skilled in the art as "endless" or continuous fibers. The staple fibers or filaments may be present as multicomponent fibers, in particular as so called bicomponent fibers which are well known in the art.

Suitable fiber materials can be selected from a group of synthetic polymers or copolymers. Suitable polymer materials are, e.g., polyamides such as, e.g., polyhexamethylene diadipamide, polycaprolactam, aromatic or partially aromatic polyamides ("aramids"), aliphatic polyamides such as, e.g., nylon, partially aromatic or fully aromatic polyesters, polyphenylene sulfide (PPS), polymers with ether- and keto groups such as, e.g., polyetherketones (PEK) and polyetheretherketone (PEEK), polyolefins such as, e.g., polyethylene or polypropylene, cellulose or polybenzimidazoles. In addition to the previously cited synthetic polymers, those polymers are also suited that are spun from solution. Melt-spinnable synthetic polymers, such as polyester, in particular poly(ethylene terephthalate), polyolefins, in particular polypropylene and/or polyethylene or polyamides are employed. Most preferred as melt-spinnable synthetic polymers are polypropylene and even more preferably poly(ethylene terephthalate).

Among the textile fabrics of fibers of synthetic polymers, non-woven fabrics, especially so-called spun bonds, that is, spunbonded non-woven fabrics produced by a tangled deposit of melt-spun filaments, are preferred. They consist of endless synthetic fibers of melt-spinnable polymer materials.

The organic synthetic non-woven is preferably made of polyester fibers by the spunbond method described in DE-OS 24 60 755. Preferably, the synthetic employed is a poly(ethylene terephtalate) or a copolyester.

The spunbonded non-woven preferably consists of melt-spinnable polyesters. In principle, all known types of polyester material suitable for the manufacture of fibers are considered as polyester material. Polyesters containing at least 95 mole % polyethyleneterephthalate (PET), especially those of unmodified PET, are especially preferable.

Typically, the laid down nonwoven is thereafter mechanically pre-consolidated, preferably by needling where 10 to 40 stitches per cm² are placed.

The individual polymer nonwoven layer exhibits a weight per unit area ranging from 10 to 500 g/m² and preferably 20 to 250 g/m².

The polymer nonwoven exhibits mechanical strengths in the range of at least 10N/5cm for 20g/m² material and at least 800N/5cm for 250g/m². Therefore the specific mechanical strength M (N / 5cm / area weight (g/m²)) is between 0.2 - 0.8 Nm² /gcm]. The mechanical strength is measured according to EN 29073-3.

The polymer nonwoven layer can be subject to shrinking. Such shrinking of the fibers can be executed prior to or optionally after the pre-consolidation. Heat is applied at temperatures in the range of 140 to 220°C or temperatures corresponding to subsequent lamination temperature and the bitumen containing bath employed to impregnate the laminate with bitumen. Other methods of pre-consolidation such as mechanically, hydrodynamically, thermally (e.g., calender) are contemplated by the inventors and within the scope of the invention.
In an exemplary embodiment, the synthetic non-wovens can be pre-consolidated mechanically, hydrodynamically, thermally or by calendering at temperatures where the synthetic fibers would shrink in totality.

Preferably, the synthetic polymer non-woven is shrunk prior to bonding with the nonwoven layer of non-polymer fibers (NPF fabric layer), e.g. prior or after pre-consolidation, but again, preferably before bonding with the NPF fabric layer. In this context, any pre-consolidation, e.g. by needling, is performed at the individual nonwoven layer prior to the assembly of the instant laminate. The remaining shrinkage of the nonwoven is less than 3.5% when treated with 200°C for 10 minutes. The shrinkage has been measured by using a 300mmx350 mm sample. After a heat treatment of the samples in an oven at 200°C for 10min the changes of the sample dimensions were determined.

If the laminate materials in accordance with the invention should additionally have a flame-retardant action, it is advantageous if they were spun from polyesters modified in a flame-retardant manner. Such polyesters modified in a flame-retardant manner are known.

Preferably, the individual titers of the synthetic polymer fibers in the polymer nonwoven layer are between 1 and 16 dtex, preferably 2 to 10 dtex. The aforementioned titers are particularly preferred for spunbonded polyester filaments as synthetic polymer non-woven fabric.

In a further embodiment of the invention the polymer nonwoven, in particular the spunbonded non-woven fabric, can also be consolidated by melt binder. Such nonwoven contains carrier fibers and melted fibers. The carrier fibers and melted fibers can be derived from any thermoplastic, fiber-forming polymers. Such spunbonded non-woven fabrics hardened by melt binder are described, e.g., in EP-A-0,446,822 and EP-A-0,590,629.

In addition to endless filaments (spunbond method) the polymer nonwoven can also be constructed of staple fibers or mixtures of staple fibers and endless filaments.

The individual titers of the staple fibers in such polymer non-woven fabric are between 1 and 16 dtex, preferably 2 to 10 dtex. The staple length is 1 to 100 mm, preferably 2 to 50 mm, especially preferably 2 to 30 mm.

The polymer nonwoven, beside the at least one synthetic polymer material, can also be constructed of fibers of different materials, e.g. of different synthetic polymer materials or any other material in combination with such synthetic polymer material, in order to be able to achieve special properties.

The polymer nonwoven can also additionally have a reinforcement of fibers, threads or filaments. Multi-filaments or rovings based on glass, polyester, carbon or metal are preferred as reinforcement threads. The reinforcement threads can be used as such or also in the form of a textile surface structure, e.g., as fabric, laying, knitted fabric, knitwear or non-woven fabric. The reinforcements preferably consist of a parallel thread sheet or a laying.

The fibers, in particular the filaments and/or staple fibers, of the polymer nonwoven can have a practically round cross-section or also other forms such as dumbbell-shaped, kidney-shaped, triangular or tri- or multi-lobed cross-sections. Hollow fibers and bi-or multi-component fibers can also be used. Furthermore, the aforementioned melting fibers can also be used in the form of bi-component or multi-component fibers.

The polymer nonwoven or the fibers forming such nonwoven can be modified by customary additives, e.g., by antistatic agents such as carbon black.

The polymer used for forming the filaments and/or staple fibers can exist or comprise of polymer recyclates or recyclated polymeric materials.

### Non-polymer fiber (NPF) fabric

The fabric of non-polymer material can be staple and/or filamentous fibers.

The fiber-forming materials are preferably ceramic fibers, mineral fibers or glass fibers that can also be used in the form of mixtures.

Fabrics are considered to be tissues, layings, multiaxial fabrics, knitted fabrics, knitwear, non-woven materials and woven materials, preferred fabrics are woven and non-woven fabrics.

The weight per unit area of the individual layer of fabric of non-polymer fibers is between 15 and 500 g/m², preferably 20 and 250 g/m², and most preferred 20-100 g/m², wherein these data refer to fabrics without binders, in particular to nonwoven fabrics.

The individual NPF fabric layer, in particular the nonwoven fabric layer, exhibits a mechanical strength of 50 - 800N/5cm, preferably 100 - 500 N/5cm. The mechanical strength is measured according to EN 29073-3. The individual non-polymer fabric, beside the at least one non-polymer material, can also be constructed of fibers of different materials, e.g. of different non-polymer materials or any other material in combination with such non-polymer material, in order to be able to achieve special properties.

The non-polymer fabric can comprise 10 - 90% of polymeric fiber or filaments based on the total weight of the non-polymer fabric. All polymeric fiber materials as mentioned in the polymer fiber nonwoven section of this description can be used. Polyester staple fibers or polypropylene staple fibers are prefered.

The non-polymer fabric, in particular the nonwoven fabric layer, can also additionally have a reinforcement of fibers, threads or filaments. Multi-filaments or rovings based on glass, polyester, carbon or metal are preferred as reinforcement threads. The reinforcement threads can be used as such or also in the form of a textile structure, e.g., as fabric, laying, knitted fabric, knitwear or non-woven fabric. The reinforcements preferably consist of a parallel thread sheet or a laying.

### Mineral- and ceramic fibers

The fabric, in particular the nonwoven fabric, of mineral- and ceramic fibers are aluminosilicate fibers, ceramic fibers, dolomite fibers, wollastonite fibers or fibers of vulcanites, preferably basalt fibers, diabase fibers and/or melaphyr fibers, especially basalt fibers. Daibases and melaphyrs are designated combined as paleobasalts and diabase is also often designated as greenstone.

The mineral fiber fabric, in particular the non-woven fabric, can be formed from filaments, that is, infinitely long fibers or of staple fibers. The average length of the staple fibers in the fabric of mineral fibers used in accordance with the invention is between 5 and 120 mm, preferably 10 to 90 mm. In a further embodiment of the invention the mineral fiber fabric contains a mixture of endless fibers and staple fibers.

The average fiber diameter of the mineral fibers is between 5 and 30 µm, preferably between 8 and 24 µm, especially preferably between 8 and 15 µm. The weight per unit area of the individual fabric, in particular nonwoven fabric, of mineral fibers is between 15 and 500 g/m², preferably 20 and 250 g/m², and most preferred 20 - 100 g/m², wherein these data refer to fabrics without binders, in particular to nonwoven fabrics.

### Glass Fibers

For the non-polymer fabric, in particular for the non-polymer nonwoven, glass fibers are particularly preferred. They are constructed from filaments, that is, infinitely long fibers or of staple fibers. The average length of the staple fibers is between 5 and 120 mm, preferably 10 to 90 mm. In a further embodiment of the invention the glass fiber fabric or non-woven fabric contains a mixture of endless fibers and staple fibers.

The average diameter of the glass fibers is between 5 and 30 µm, preferably between 8 and 24 µm, especially preferably between 10 and 21 µm.
In addition to the previously cited diameters so-called glass microfibers can also be used. The preferred average diameter of the glass microfibers is between 0.1 and 5 µm. The microfibers forming the textile surface can also be present in mixtures with other fibers, preferably glass fibers. Moreover, a layer-shaped construction of microfibers and glass fibers is also possible.
Suitable glass fibers comprise - among others - those manufactured from A-glass, C-glass, E-glass, S-glass, T-glass or R-glass.

The weight per unit area of the individual fabric, in particular nonwoven fabric, of glass fibers is between 15 and 500 g/m², preferably 20 and 250 g/m², and most preferred 20 - 100 g/m², wherein these data refer to fabrics without binders, in particular to nonwoven fabrics.

The non-polymer fabric, in particular the nonwoven fabric, can be manufactured according to any known method. For glass non-woven fabrics this is preferably the dry- or wet laying method.

The non-woven of glass fiber is preferably produced in accordance to a so-called wet process wherein fibers of the E or C class and mixtures thereof or other commercially available glass such as ECR glass are pre-consolidated with a urea, melamine and other binder resins, as discussed above. It will readily be recognized by the skilled artisan that up to 90 percent of the glass fibers can be substituted by other fibers. In particular, cellulose based fibers, polyacrylonitrile, polyester, polyamide, etc. In a preferred embodyment the glass fiber nonwoven comprises 10 - 90% of Polyethylenetherephtalate fibers or Polypropylene fibers based on the total weight of the glass fiber nonwoven. The fibers can be constructed as single component or as bicomponentt fibers.

Preferably, the B-stage binder being present in at least one of the two or more different layers in the B-stage condition, which means partially cured, is located in the fabric layer of non-polymer fibers, which preferably is a glass and/or mineral fiber nonwoven.

The non-polymer fabric layer to be provided with the B-stage binder composition can basically be used without pre-strengthening binders, in particular chemical binders. However, in order to ensure the required strengths in the further working of the mat binders can also be introduced and/or known needling methods can be used. In addition to the possibility of a mechanical strengthening, e.g., by calendering or needling, in particular the hydrodynamic needling is also mentioned here. Chemical and/or thermoplastic binders are suitable as binders.

However, the non-polymer fabric layer to be provided with the B-stage binder composition is preferably pre-strengthened with a chemical binder. The binders used can be the same or different but must be selected from the group of the binder systems compatible with the B-stage binder. The additional binder component is maximally 30 % by weight, preferably 20 % by weight or less. However these embodiments would not fall in the scope of the claims.

### B-stage Binder

The B-stage binder composition is applied to the polymer nonwoven and/or to the fabric layer of non-polymer fibers, in particular to the non-polymer nonwoven, and then partly cured to B-stage condition. During the subsequent lamination process of the (i) at least one polymer nonwoven layer and the (ii) at least one fabric layer of non-polymer fibers, the B-stage binder gets fully cured and thereby glues the layers together.

B-stage binders in the B-stage, within the instant invention, means a binder that is only partially cured or hardened and can still experience a final hardening, e.g., by thermal post-treatment. Such B-stage binders are exhaustively described in US-A-5,837,620, US-A-6,303,207 and US-A-6,331,339. The B-stage binders disclosed therein are also subject matter of the present description. B-stage binders are preferably binders based on furfuryl alcohol formaldehyde, phenol formaldehyde, melamine formaldehyde, urea formaldehyde and their mixtures. Preferably, aqueous systems are concerned. Further preferred binder systems are formaldehyde-free binders. B-stage binders are distinguished in that they can be subjected to a multistage hardening, that is, they still have a sufficient binding action after the first hardening or after the first hardenings so that they can be used for the further processing.

Preferred B-stage binders are binders based melamine formaldehyde. Preferably, aqueous systems are concerned. B-stage binders are distinguished in that they can be subjected to a multistage hardening, that is, they still have a sufficient binding action after the first hardening or after the first hardenings so that they can be used for the further processing.

In order to form the B-stage, such binders are optionally hardened after the addition of a catalyst. The amount of hardening catalyst is up to 10% by weight, preferably 0.25 to 7% by weight (relative to the total binder content). For example, ammonium nitrate as well as organic aromatic acids, e.g., maleic acid and p-toluene sulfonic acid are suitable as hardening catalyst since it allows the B-stage state to be more rapidly reached. In addition to ammonium nitrate, maleic acid and p-toluene sulfonic acid, all materials are suitable as hardening catalyst that have a comparable acidic function. In order to reach the B-stage the textile surface structure impregnated with the binder is dried under the influence of temperature without producing a complete hardening. The necessary process parameters are dependent on the binder system selected.

The lower as well as the upper temperature limit can be influenced by the selection of the duration and/or by adding or avoiding rather large or rather strong acidic hardening catalysts and/or by optionally using stabilizers.

The application of the B-stage binder composition, in particular onto the non-polymer fabric, in particular onto the non-polymer nonwoven, can take place with the aid of all known methods. In addition to spraying on, impregnating and pressing in, the binder can also be applied by coating or by rotary nozzle heads. The B-stage binder is distributed/soaked throughout the entire non-polymer fabric. In a first curing or hardening step the B-stage condition of the B-stage binder is accomplished, e.g. by heating, and the non-polymer fabric is consolidated. The B-stage binder is in the B-stage.

In a preferred embodiment, the application of the B-stage binder composition, in particular onto the non-polymer fabric, in particular onto the non-polymer nonwoven, is done in such a manner, that a gradient is obtained. This can be accomplished by applying the B-stage binder in several steps, e.g. by applying an additional spraying on, impregnating, pressing in, or foam, e.g. by coating or by rotary nozzle heads. It is in particular preferred, to apply such additional B-stage binder on such surface of the non-polymer fabric, in particular onto the non-polymer nonwoven, which later faces towards the polymer nonwoven layer. The binder gradient is particularly useful if a low total binder content in the laminate is required while still providing a strong binding power in the interface area.

The total binder content in the non-polymer fabric is between 10% and 80% based on total weight of the dried non-polymer fabric and includes all applied binder components and additives.

The total binder content of the laminate depends on the binder contents of the polymer fiber nonwoven and the non-polymer fabric.

### Functional Materials

The non-polymer fabric can also contain additives and/or functional materials. The additives and functional material can be applied at the same time with the B-stage binder composition, e.g., as mixture or as individual components, or before or after the application of the binder.

In order to fix the functional materials a binder can be additionally added for fixing the functional materials on the textile surface structure. The same binder (B-stage binder) is preferably selected here as is present in the textile surface structure. The content of functional material is determined by the subsequent use.

The application of the functional material used takes place as a function of the nature of the particular functional material by known techniques.

### Flameproofing agents

The functional material is preferably flameproofing agents, materials for discharging electrostatic charges, materials for screening off electromagnetic rays, organic or inorganic pigments, especially colored pigments. The functional materials are preferably arranged on the side of the NPF structure and can at least partially pass through the fabric.

In a variant of the method an additional binder is added to fix the functional materials on the textile surface structure. The same binder (B-stage binder) as is present in the textile surface structure is preferably selected here. The content of functional materials is determined by the subsequent use.

The flameproofing agents are inorganic flameproofing agents, organophosphorus flameproofing agents, nitrogen-based flameproofing agents or intumescence flameproofing agents. Halogenated (brominated and chlorinated) flameproofing agents can also be used but are less preferred on account of their risk evaluation. Examples for such halogenated flameproofing agents are polybrominated diphenylether, e.g., decaBDE, tetrabromobisphenol A and HBCD (hexabromocyclododecane).

The nitrogen-based flameproofing agents are melamines and urea.

The organophosphorus flameproofing agents are typically aromatic and alkyl esters of phosphoric acid. TCEP (trischloroethylphosphate), TCCP (trischloropropylphosphate), TDCCP (trisdichloroisopropylphosphate), triphenylphosphate, trioctylphosphate (tris-(2-ethylhexyl)phosphate) are preferably used.

The inorganic flameproofing agents are typically hydroxides such as aluminum hydroxide and magnesium hydroxide, borates such as zinc borate, ammonium compounds such as ammonium sulfate, red phosphorus, antimony oxides such as antimony trioxide and antimony pentoxide and/or laminated silicates such as vermiculite.

### Antistatic agents

Antistatic- and electromagnetic screening effects can be achieved by the use of agents for raising the electrical conductivity.

The antistatic agents are usually particles that are electrically conductive. Suitable materials are electrically conductive carbons such as carbon black, graphite and carbon nanotubes (C-nanotubes), conductive plastics or fibers of metal or metallic components.

### Electrically conductive materials

The materials for screening electromagnetic rays are usually electrically conductive materials. They can be built up in the form of foils, particles, fibers or wires and/or textiles surface structures of the previously cited materials.

### Pigments

The inorganic or organic pigments are particulate materials. In addition to fillers such as CaCO₃, talcum, gypsum or silica, the pigments, to the extent that they should increase the value of the composite material, are in particular pigments that can be used in colors.

### Hydrophobic agents

Hydrohobic agents are additives which are able to increase or modify the compatibility of the B-stage binder composition to the carrier or the textile structure. Prominent but not limiting examples are fluorine or silane containing components which can greatly improve the compatibility of the binder to metal and glass surfaces.

### Manufacturing Process

The two- or multilayer fabric according to the instant invention can be produced through either an in-line or an off-line process.

The invention relates to a process of manufacturing a two layer fabric laminate in accordance with claim 20. The off-line process is characterized in that the at least one pre-fabricated polymer nonwoven layer and at least one pre-fabricated fabric layer of non-polymer fibers, in particular a nonwoven of non-polymer fibers, are separately produced.

The polymer nonwoven or the polymeric fibers of the nonwoven are shrunk before laminated to the non-polymer fabric. It is preferred that the polymer nonwoven or the polymeric fibers of the nonwoven are heat treated by conveying the non-woven through an oven at temperatures of 140 to 220°C, in such a manner that subsequent treatment will not induce shrinkage of the fibers and/or non-woven. The remaining shrinkage must be below 3.5% (measured at 200°C for 10min). The shrinkage has been measured by using a 300mmx350 mm sample. After a heat treatment of the samples in an oven at 200°C for 10min the changes of the sample dimensions were determined. The non-woven thus produced are then combined with the non-woven of non-polymeric fibers by means of heat and optionally pressure.

As mentioned before the polymer nonwoven can also comprise a B-stage binder. The binder can be applied before or preferably after the heat treatment for shrinking the fiber. The polymer nonwoven, the non-polymer fabric, or both can comprise a B-stage binder. In a multilayer laminate (more than two layers) one or more of the nonwoven or fabrics can comprise a B-stage binder. It is preferred that the non-polymer fabric comprises the B-stage binder.

In the in-line process, the fabric, in particular the non-woven, of non-polymeric fibers is introduced into the laminate in the course of production of the non-woven of polymeric layers. Particularly in the spunbond process, one or several curtains of polyester filaments are first deposited on a moving conveyor line. The fabric of non-polymeric fibers is laid upon the one or more layers of polyester, and thereupon additional layers of polyester are optionally deposited thereon. The non-woven layers of polyester are subjected to heat shrinking prior to combining the different layers.

The polymer nonwoven can also comprise a B-stage binder. The binder can be applied before or preferably after the heat treatment for shrinking the fiber. It is preferred that the non-polymer fabric comprises the B-stage binder.

In accordance with a preferred embodiment, the non-woven of glass fibers is introduced between spun-bonds of synthetic non-woven layers of polyester by the so-called in-line process. Spin beams corresponding to the fiber curtains produced (i.e.the synthetic non-woven) are spun or drawn through ducts on a moving deposition area such as a conveyor. Thereupon, the prefabricated non-woven layer of glass staple fibers comprising a B-stage binder in the B-Stage condition is laid upon the pre-consolidated or non-preconsolidated nonwoven layer of polyester filament and vice versa. The pre-consolidation can be accomplished as described before. The non-woven layer of polyester is subjected to heat shrinking prior to combining it with the non-polymer layers. Thereupon, a prefabricated polymer non-woven layer is laid upon the pre-consolidated non-polymer fabric and vice versa. Additional layers are added as desired.

In a similar manner, when a double-ply laminate is manufactured, corresponding spin beams are employed to produce the non-wovens, and wherein the synthetic polymer non-woven is deposited on the pre-fabricated glass mat. The synthetic polymer filamental non-woven are shrunk prior to bonding with the glass fiber layer.

When following the off-line route, the nonwoven layer or layers of polymeric fibers and the fabric, in particular nonwoven, layer or layers of non-polymeric fibers which comprise the B-stage binder in the B-Stage condition are pre-manufactured and pre-consolidated as described above. All layers are then combined to a multilayer fabric material subject to the final consolidation. The nonwoven layers of polymeric fibers are shrunk as described before.

When following the in-line route the nonwoven layer or layers of non-polymeric fibers which comprise the B-stage binder in the B-Stage condition are pre-manufactured and pre-consolidated as described above. The nonwoven layer or layers of polymeric fibers which are preferrably pre-consolidated as described above are added and combined to a multilayer nonwoven material. The multilayer nonwoven material is then subject to the final consolidation. The nonwoven layers of polymeric fibers are shrunk as described before.

Optionally the multilayer nonwoven material can be needled before the final consolidation. Mechanical or hydrodynamic needling is preferred.

The final consolidation of the layers is performed by heating the multilayer fabric material in an oven in order to finally cure the binder in the B-Stage condition. In order to obtain a desired final thickness of the multilayer fabric material can be compressed by treatment with a commercially available calender, a fabric/belt calender or a laminate calender. This can be done prior, during or after the consolidation step. It is preferred that the final consolidation takes place during calendering the fabric in a belt calender or laminate calender.

The applicable temperatures and pressures must be selected in accordance with the used materials and the line speed during production. The optimum parameter can be found without undue experimental trials. For Polyethylenterephthalate / Glass laminates comprising a melamine formaldehyde B-stage binder typical temperatures are in the range of 180°C - 260°C. When using a calendar the multilayer fabric is preferably wound around one of the calendar which has a temperature between 180°C - 260°C and a pressure between 1 - 50 daN/cm, preferably between 10 - 50 daN/cm. It is preferred to use fabric/belt calender for lamination. The preferred temperature when using a fabric/belt calender is between 180°C - 260°C, preferably the applied pressure is in the range 1 - 50 daN/cm.

At the beginning of the final consolidation, the B-stage binder which is in the B-stage and e.g. is present in the non-polymer fabric layer(s), penetrates into the respective interface region between non-polymer fabric layer and the polymer Nonwoven layer. Therefore the binder homogeneously spreads out in the corresponding interface layers. At the same time the B-stage binder gets its final hardening.

The laminates exhibit good mechanical strength and, in particular, good delamination qualities. The delamination strength exceeds 20N/5cm. The delamination force has been measured on samples of 100mm length and 50mm width at a measurement speed of 100mm/min.

Thus, they may serve as support layer for roofing felts, roofing and sealing membranes, PVC floor coverings and the like. Particularly, they show an elevated dimensional stability and improved flame retardation properties.

Furthermore, the product manufactured by the process outlined above provides dimensional stability and virtually eliminates "neck-down" problems during the impregnation step leading to significantly higher production rates.

In particular the non-woven laminates (e.g. impregnated with bitumen) are endowed, inter alia, with good strength, excellent dimensional stability, a favorable flexibility and good delamination properties. These laminates may be manipulated with ease when used as roofing felts in the welding process and the casting process. Additionally, the roof can be walked upon without damaging the felts. In this manner, the carrier laminates do not exert banana curving and possess very favorable properties such as nail tear strength, resistance to tear propagation and peel strength.

### Use

Subject matter of the invention is further the use of the laminate according to the invention in bitumeous roofing felts.

## Claims

1. Two layer fabric laminate comprising (i) at least one polymer fiber nonwoven layer based on melt-spinnable synthetic polymers and (ii) at least one layer of non-polymer fibers fabric, the at least two different layers (i) and (ii) have been laminated using at least one B-stage binder, obtainable by a process comprising the steps of
a) providing at least one polymer fiber nonwoven layer based on melt-spinnable synthetic polymers,
b) providing at least one layer of non-polymer fibers fabric,
c) at least the polymer fiber nonwoven layer based on melt-spinnable synthetic polymers or the layer of non-polymer fibers fabric contains at least one B-Stage binder in the B-stage condition,
d) laminating the at least two different layers allowing the B-Stage binder in the B-stage condition to spread out in the corresponding interface layer, and final curing of the B-stage binder, in said lamination only one or more B-stage binder have been used for the lamination of the two different layers (i) and (ii), the polymer fiber non-woven having a specific mechanical strength M (N / 5cm / area weight (g/m²)) of 0.2-0.8 Nm² /gcm.

2. Laminate as claimed in claim 1, wherein the polymer non-woven is based on staple fibers and/or filamentous fibers.

3. Laminate as claimed in claim 1, wherein the polymer of the polymer non-woven is a melt-spinnable synthetic polymer such as polyester, polyolefin, polyamides or a mixture thereof.

4. Laminate as claimed in claim 1, wherein the polymer non-woven is a spunbonded non-woven.

5. Laminate as claimed in claim 1, wherein the polymer non-woven has a weight per unit area ranging from 10 to 500 g/m² and preferably 20 to 250 g/m².

6. Laminate as claimed in claim 1, wherein the polymer non-woven has been pre-consolidated mechanically, hydrodynamically, thermally or by calendering.

7. Laminate as claimed in claim 1, wherein the remaining shrinkage of the polymer non-woven is less than 3.5% when treated with 200°C for 10 minutes.

8. Laminate as claimed in claim 1, wherein the polymer fibers in the polymer nonwoven layer are between 1 and 16 dtex, preferably 2 to 10 dtex.

9. Laminate as claimed in claim 1, wherein the polymer nonwoven layer contains an additional reinforcement by fibers, threads or filaments, preferably in the form of multi-filaments or rovings, based on glass, polyester, carbon or metal.

10. Laminate as claimed in claim 1, wherein the at least one fabric layer of non-polymer fibers is based on staple and/or filamentous fibers.

11. Laminate as claimed in claim 1, wherein the at least one fabric layer of non-polymer fibers is based on ceramic fibers, mineral fibers, glass fibers or mixtures thereof.

12. Laminate as claimed in claim 1, wherein the at least one fabric layer of non-polymer fibers is a tissues, layings, multiaxial fabrics, knitted fabrics, knitwear, non-woven material and/or woven material, preferably a woven and/or non-woven.

13. Laminate as claimed in claim 1, wherein the at least one fabric layer of non-polymer fibers has a weight per unit area of the individual layer between 15 and 500 g/m², preferably 20 and 250 g/m², wherein these data refer to fabrics without binders.

14. Laminate as claimed in claim 1, wherein the at least one fabric layer of non-polymer fibers has a mechanical strength of 50 - 800N/5cm, preferably 100 - 500 N/5cm.

15. Laminate as claimed in claim 1, wherein the at least one fabric layer of non-polymer fibers has an additional reinforcement by fibers, threads or filaments, preferably in the form of multi-filaments or rovings, based on glass, polyester, carbon or metal.

16. Laminate as claimed in claim 1, wherein the at least one fabric layer of non-polymer fibers comprise 10 to 90% by weight polymer fibers.

17. Laminate as claimed in claim 1, wherein the at least one fabric layer of non-polymer fibers is based on glass fibers, preferably based on glass staple fibers.

18. Laminate as claimed in claim 17, wherein up to 90 % by weight of the glass fibers can be substituted by other fibers.

19. Laminate as claimed in claim 1, wherein the at least one fabric layer of non-polymer fibers has been pre-strengthened, preferably by mechanical strengthening and/or by chemical or thermoplastic binders.

20. Process for manufacturing a two-layer fabric laminate comprising (i) at least one polymer fiber nonwoven layer based on melt-spinnable synthetic polymers and (ii) at least one layer of non-polymer fibers fabric, the at least two different layers (i) and (ii) have been laminated using at least one B-stage binder, comprising the steps of
a) providing at least one polymer fiber nonwoven layer based on melt-spinnable synthetic polymers,
b) providing at least one layer of non-polymer fibers fabric,
c) at least the polymer fiber nonwoven layer based on melt-spinnable synthetic polymers or the layer of non-polymer fibers fabric contains at least one B-Stage binder in the B-stage condition,
d) laminating the at least two different layers allowing the B-Stage binder in the B-stage condition to spread out in the corresponding interface layer, and final curing of the B-stage binder, in said lamination only one or more B-stage binder have been used for the lamination of the two different layers (i) and (ii), the polymer fiber non-woven having a specific mechanical strength M (N / 5cm / area weight (g/m²)) is 0.2 - 0.8 Nm² /gcm.

21. Process as claimed in claim 20, wherein the fabric layer of non-polymer fibers contains at least one B-Stage binder in the B-stage condition.

22. Process as claimed in claim 20, wherein the lamination and curing takes place at temperatures of 180 to 260°C.

23. Process as claimed in claim 20, wherein the lamination and curing takes place at pressures between 1 - 50 daN/cm, preferably between 10 - 50 daN/cm.

24. Use of the laminate as claimed in claim 1 to 19 as carrier for roofing felts, for bituminous roofing felts, sealing membranes or PVC floor coverings.

25. Roofing felts, in particular bituminous roofing felts, comprising at least one laminate as claimed in claim 1 to 19.

## Patentansprüche

1. Zweischichtiges Textilstofflaminat, umfassend (i) mindestens eine Polymerfaser-Vliesstoffschicht auf der Basis von schmelzspinnenbaren synthetischen Polymeren und (ii) mindestens eine Schicht Nichtpolymerfasertextilstoff, wobei die mindestens zwei verschiedenen Schichten (i) und (ii) mithilfe mindestens eines B-Stufen-Bindemittels laminiert worden sind, erhältlich durch ein Verfahren umfassend die Schritte des
a) Bereitstellens mindestens einer mindestens eine Polymerfaser-Vliesstoffschicht auf der Basis von schmelzspinnenbaren synthetischen Polymeren,
b) Bereitstellens mindestens einer Schicht Nichtpolymerfasertextilstoff,
c) wobei mindestens die Polymerfaser-Vliesstoffschicht auf der Basis von schmelzspinnenbaren synthetischen Polymeren oder die Schicht Nichtpolymerfasertextilstoff, mindestens ein B-Stufen-Bindemittel im B-Stufenzustand enthält,
d) Laminierens der mindestens zwei verschiedenen Schichten, wobei gestattet wird, dass das B-Stufen-Bindemittel im B-Stufenzustand sich in der entsprechenden Zwischenschicht ausbreitet, und abschließenden Aushärtens des B-Stufen-Bindemittels, wobei bei dem Laminieren nur ein oder mehr B-Stufen-Bindemittel für das Laminieren der beiden verschiedenen Schichten (i) und (ii) verwendet worden sind, wobei der Polymerfaservliesstoff eine spezifische mechanische Stärke M (N/5 cm/Flächengewicht (g/m²)) von 0,2 - 0,8 Nm²/gcm aufweist.

2. Laminat nach Anspruch 1, wobei der Polymervliesstoff auf Stapelfasern und/oder fadenförmigen Fasern basiert.

3. Laminat nach Anspruch 1, wobei das Polymer des Polymervliesstoffs ein schmelzspinnbares synthetisches Polymer wie beispielsweise Polyester, Polyolefin, Polyamide oder eine Mischung davon ist.

4. Laminat nach Anspruch 1, wobei der der Polymervliesstoff ein spinnbondierter Vliesstoff ist.

5. Laminat nach Anspruch 1, wobei der Polymervliesstoff ein Gewicht pro Einheitsbereich im Bereich von 10 bis 500 g/m² und bevorzugt 20 bis 250 g/m² aufweist.

6. Laminat nach 1, wobei der Polymervliesstoff mechanisch, hydrodynamisch, thermisch oder durch Kalandrieren vorkonsolidiert worden ist.

7. Laminat nach Anspruch 1, wobei die bleibende Schrumpfung des Polymervliesstoffs weniger als 3,5 % bei Behandlung mit 200 °C 10 Minuten lang beträgt.

8. Laminat nach Anspruch 1, wobei die Polymerfasern in der Polymervliesstoffschicht 1 bis 16 dtex, bevorzugt 2 bis 10 dtex betragen.

9. Laminat nach Anspruch 1, wobei die Polymervliesstoffschicht eine zusätzliche Verstärkung durch Fasern, Fäden oder Filamente, bevorzugt in Form von Multifilamenten oder Fasersträngen auf der Basis von Glas, Polyester, Kohlenstoff oder Metall enthält.

10. Laminat nach Anspruch 1, wobei die mindestens eine Textilstoffschicht aus Nichtpolymerfasern auf Stapel- und/oder fadenförmigen Fasern basiert.

11. Laminat nach Anspruch 1, wobei die mindestens eine Textilstoffschicht aus Nichtpolymerfasern auf Keramikfasern, Mineralfasern, Glasfasern oder Mischungen davon basiert.

12. Laminat nach Anspruch, wobei die mindestens eine Textilstoffschicht aus Nichtpolymerfasern ein Papiertuch, Futterfaden, multiaxiale Textilstoffe, Strickstoffe, Maschenware, Vliesstoff und/oder Gewebe, bevorzugt ein Gewebe und/oder Vliesstoff ist.

13. Laminat nach Anspruch 1, wobei die mindestens eine Textilstoffschicht aus Nichtpolymerfasern ein Gewicht pro Einheitsfläche der einzelnen Schicht zwischen 15 und 500 g/m², bevorzugt 20 und 250 g/m² aufweist, wobei diese Daten sich auf Textilstoffe ohne Bindemittel beziehen.

14. Laminat nach Anspruch 1, wobei die mindestens eine Textilstoffschicht aus Nichtpolymerfasern eine mechanische Festigkeit von 50 - 800 N/5 cm, bevorzugt 100 - 500 N/5 cm aufweist.

15. Laminat nach Anspruch 1, wobei die mindestens eine Textilstoffschicht aus Nichtpolymerfasern eine zusätzliche Verstärkung durch Fasern, Fäden oder Filamenten, bevorzugt in Form von Multifilamenten oder Fasersträngen auf der Basis von Glas, Polyester, Kohlenstoff oder Metall aufweist.

16. Laminat nach Anspruch 1, wobei die mindestens eine Textilstoffschicht aus Nichtpolymerfasern 10 bis 90 Gewichts-% Polymerfasern umfasst.

17. Laminat nach Anspruch 1, wobei die mindestens eine Textilstoffschicht aus Nichtpolymerfasern auf Glasfasern basiert, bevorzugt auf Glasstapelfasern basiert.

18. Laminat nach Anspruch 17, wobei bis zu 90 Gewichts-% der Glasfasern durch andere Fasern substituiert sein können.

19. Laminat nach Anspruch 1, wobei die mindestens eine Textilstoffschicht aus Nichtpolymerfasern bevorzugt durch mechanisches Verstärken und/oder durch chemische oder thermoplastische Bindemittel vorverstärkt worden ist.

20. Verfahren für die Herstellung eines zweischichtigen Textilstofflaminats umfassend (i) mindestens eine Polymerfaser-Vliesstoffschicht auf der Basis von schmelzspinnenbaren synthetischen Polymeren und (ii) mindestens eine Schicht Nichtpolymerfasertextilstoff, wobei mindestens zwei verschiedene Schichten (i) und (ii) mithilfe mindestens eines B-Stufen-Bindemittels lamentiert worden sind, umfassend die Schritte des
a) Bereitstellens mindestens einer Polymerfaser-Vliesstoffschicht auf der Basis von schmelzspinnenbaren synthetischen Polymeren,
b) Bereitstellens mindestens einer Schicht Nichtpolymerfasertextilstoff,
c) wobei mindestens die Polymerfaser-Vliesstoffschicht auf der Basis von schmelzspinnenbaren synthetischen Polymeren oder die Schicht Nichtpolymerfasertextilstoff, mindestens ein B-Stufen-Bindemittel im B-Stufenzustand enthält,
d) Laminierens der mindestens zwei verschiedenen Schichten, wobei gestattet wird, dass das B-Stufen-Bindemittel im B-Stufenzustand sich in der entsprechenden Zwischenschicht ausbreitet, und abschließenden Aushärtens des B-Stufen-Bindemittels, wobei bei dem Laminieren nur ein oder mehr B-Stufen-Bindemittel für das Laminieren der beiden verschiedenen Schichten (i) und (ii) verwendet worden sind, wobei der Polymerfaservliesstoff eine spezifische mechanische Stärke M (N/5 cm/Flächengewicht (g/m²)) von 0,2 - 0,8 Nm²/gcm aufweist.

21. Verfahren nach Anspruch 20, wobei die Textilstoffschicht aus Nichtpolymerfasern mindestens ein B-Stufen-Bindemittel im B-Stufenzustand enthält.

22. Verfahren nach Anspruch 20, wobei das Laminieren und Aushärten bei Temperaturen von 180 bis 260°C erfolgen.

23. Verfahren nach Anspruch 20, wobei das Laminieren und Aushärten bei Drucken zwischen 1 - 50 daN/cm, bevorzugt zwischen 10 - 50 daN/cm erfolgen.

24. Verwendung des Laminats nach Anspruch 1 bis 19 als Träger für Dachpappe, für bituminöse Dachpappe, Abdichtungsmembranen oder PVC-Fußbodenbeläge.

25. Dachpappe, insbesondere bituminöse Dachpappe, umfassend mindestens ein Laminat nach Anspruch 1 bis 19.

## Revendications

1. Stratifié de tissu à deux couches comprenant (i) au moins une couche de non tissé en fibres polymères basée sur polymères synthétiques filables à l'état fondu et (ii) au moins une couche de tissu en fibres non polymères, les au moins deux couches différentes (i) et (ii) ont été stratifiées en utilisant au moins un liant de stade B, pouvant être obtenu par un procédé comprenant les étapes de
a) pourvoir au moins une couche de non tissé en fibres polymères basée sur les polymères synthétiques filables à l'état fondu,
b) pourvoir au moins une couche de tissu en fibres non polymères,
c) au moins la couche de non tissé en fibres polymères basée sur polymères synthétiques filables à l'état fondu ou la couche de tissu en fibres non polymères, comprend au moins un liant de stade B dans la condition de stade B,
d) stratifier au moins deux couches différentes permettant au liant de stade B dans la condition de stade B pour se propager dans la couche d'interface correspondante, et le durcissement final du liant de stade B, dans ladite stratification seulement un ou plusieurs liants de stade B ont été utilisés pour la stratification des deux couches différentes (i)et (ii), le non tissé en fibres polymères ayant une résistance mécanique spécifique M(N/5cm/ poids par surface (g/m2)) de 0,2 -0,8 Nm2/gcm.

2. Stratifié selon la revendication 1, où le non tissé en polymère est basé sur les fibres discontinues et/ou les fibres filamenteuses.

3. Stratifié selon la revendication 1, où le polymère du non tissé en polymère est un polymère synthétique filable à l'état fondu tel que le polyester, la polyoléfine, les polyamides ou un mélange de ceux-ci.

4. Stratifié selon la revendication 1, où le non tissé en polymère est un non tissé filé-lié.

5. Stratifié selon la revendication 1, où le non tissé en polymère a un poids par l'unité de surface allant de 10 à 500 g/m2 et préférablement de 20 à 250 g/m2.

6. Stratifié selon la revendication 1, où le non tissé en polymère a été pré-consolidé mécaniquement, hydrodynamiquement, thermiquement ou par calandrage.

7. Stratifié selon la revendication 1, où la contraction restante du non tissé en polymère est moins de 3,5% quand traité à 200°C pour 10 minutes.

8. Stratifié selon la revendication 1, où les fibres polymères dans la couche de non tissé en polymère ont entre 1 et 16 dtex, préférablement 2 à 10 dtex.

9. Stratifié selon la revendication 1, où la couche de non tissé en polymère comprend un renforcement additionnel par fibres, fils ou filaments, préférablement dans la forme de multi-filaments ou rovings, basés sur verre, polyester, carbone ou métal.

10. Stratifié selon la revendication 1, où au moins une couche de tissu de fibres non polymères est basée sur les fibres discontinues et/ou les fibres filamenteuses.

11. Stratifié selon la revendication 1, où au moins une couche de tissu de fibres non polymères est basée sur fibres céramiques, fibres minérales, fibres de verre ou mélanges de ceux-ci.

12. Stratifié selon la revendication 1, où au moins une couche de tissu de nattes de fibres non polymères, nattes, tissus multiaxiaux, tissus tricotés, tricots, matériau non tissé et/ou matériau tissé, préférablement un tissé et/ou non tissé.

13. Stratifié selon la revendication 1, où au moins une couche de tissu de fibres non polymères a un poids par l'unité de surface de la couche individuelle entre 15 et 500 g/m2, préférablement 20 et 250 g/m2, où ces données concernent les tissus sans liants.

14. Stratifié selon la revendication 1, où au moins une couche de tissu de fibres non polymères a une résistance mécanique de 50-800 N/5cm, préférablement 100-500 N/5cm.

15. Stratifié selon la revendication 1, où au moins une couche de tissu de fibres non polymères a un renforcement additionnel par les fibres, fils ou filaments, préférablement dans la forme de multi-filaments ou rovings, basés sur verre, polyester, carbone ou métal.

16. Stratifié selon la revendication 1, où au moins une couche de tissu de fibres non polymères comprend 10 à 90 % en poids fibres polymères.

17. Stratifié selon la revendication 1, où au moins une couche de tissu de fibres non polymères est basée sur fibres de verre, préférablement sur fibres de verre discontinues.

18. Stratifié selon la revendication 17, où jusqu'à 90 % en poids des fibres de verre peuvent être substituées par d'autres fibres.

19. Stratifié selon la revendication 1, où au moins une couche de tissu de fibres non polymères a été pré-renforcée, préférablement par renforcement mécanique et/ou par liants chimiques ou thermoplastiques.

20. Procédé de production un stratifié de tissu à deux couches comprenant (i) au moins une couche de non tissé en fibres polymères basée sur polymères synthétiques filables à l'état fondu et (ii) au moins une couche de tissu en fibres non polymères, les au moins deux couches différentes (i) et (ii) ont été stratifiées en utilisant au moins un liant de stade B, comprenant les étapes de
a) pourvoir au moins une couche de non tissé en fibres polymères basée sur les polymères synthétiques filables à l'état fondu,
b) pourvoir au moins une couche de tissu en fibres non polymères,
c) au moins la couche de non tissé en fibres polymères basée sur polymères synthétiques filables à l'état fondu ou la couche de tissu en fibres non polymères comprend au moins un liant de stade B dans la condition de stade B,
d) stratifier au moins deux couches différentes permettant au liant de stade B dans la condition de stade B pour se propager dans la couche d'interface correspondante, et le durcissement final du liant de stade B, dans ladite stratification seulement un ou plusieurs liants de stade B ont été utilisés pour la stratification des deux couches différentes (i) et (ii), le non tissé en fibres polymères ayant une résistance mécanique spécifique M (N/5cm/poids par surface (g/m2)) de 0,2-0,8 Nm2/gcm.

21. Procédé selon la revendication 20, où la couche de tissu de fibres non polymères comprend au moins un liant de stade B dans la condition de stade B.

22. Procédé selon la revendication 20, où la stratification et le durcissement a lieu à températures de 180 à 260 °C.

23. Procédé selon la revendication 20, où la stratification et le durcissement a lieu à pressions entre 1-50 daN/cm, préférablement entre 10-50 daN/cm.

24. Utilisation du stratifié tel que présenté dans la revendication 1 à 19 comme support pour les feutres de toiture, pour les feutres de toiture bitumineux, membranes d'étanchéité ou revêtements de sol en PVC.

25. Feutres de toiture, en particulier feutres de toiture bitumineux, comprenant au moins un stratifié tel que présenté dans la revendication 1 à 19.
